# EUROPÄISCHE PATENTANMELDUNG

(11) **EP 3 135 413 A1**
(43) Veröffentlichungstag der Anmeldung: **01.03.2017**
(21) Anmeldenummer: 16175388.4
(22) Anmeldetag: 21.06.2016
(51) Int. Cl.: B23B 31/163, B23B 31/177

(54) **KRAFTSPANNFUTTER**

(30) Priorität: 11.08.2015 DE 102015113194
(71) Anmelder: Röhm GmbH, 89567 Sontheim (DE)
(72) Erfinder: Schweigardt, Johannes, 89567 Sontheim (DE)
(74) Vertreter: Hentrich Patentanwälte PartG mbB

(57) **Zusammenfassung**

Die Erfindung betrifft ein Spannfutter mit einem Futterkörper 1, einer Drehachse 34 mindestens zwei Spannmitteln 2, einem als Verstellhubmittel 3 der Verstellung der mindestens zwei Spannmittel 2 dienenden, über einen Trieb 4 betätigbaren Spiralring 26 und mit mindestens einem über ein Zugmittel 6 betätigbares Spannhubmittel 7. Das Spannhubmittel 7 ist dabei parallel zur Drehachse 34 im Futterkörper 1 angeordnet und ist parallel zur Drehachse 34 bewegbar.

## Beschreibung

Die Erfindung betrifft ein Spannfutter mit einem Futterkörper, einer Drehachse, mindestens zwei Spannmitteln, einem als Verstellhubmittel der Verstellung der mindestens zwei Spannmittel dienenden, über einen Trieb betätigbaren Spiralring und mit mindestens einem über ein Zugmittel betätigbares Spannhubmittel.

Derartige Spannfutter sind aus der Patentschrift DE 508 617 bekannt, bei der eine Verstellung der Spannbacken mit dem Verstellhubmittel eines Spiralrings erfolgt, während die endgültige Verstellung für den Spannvorgang zur Aufbringung der erforderlichen Spannkraft durch einen als Winkelhebel ausgebildetes Spannhubmittel bewirkt wird, der um eine Achse verdrehbar ist. Bei der Verstellung der Spannbacken über den Spiralring muss in der radialen Richtung auch der Winkelhebel verstellt werden, wozu in dem Kolben eine radial orientierte Tasche ausgebildet ist, in die der Winkelhebel eintauchen kann. Die aus diesem Patent bekannte Lösung ist daher neben dem Stellring auf den Einsatz eines Winkelhebels angewiesen, der parallel zu der Verstellrichtung des Spiralrings am Futterkörper bzw. radial zur Drehachse des Spannfutters angeordnet ist und auch parallel zu der Verstellrichtung des Spiralrings bzw. radial zur Drehachse des Spannfutters bewegbar ist.

Weiterhin ist die Offenlegungsschrift DE 1 752 847 bekannt, die ein Mehrbackendrehfutter zeigt, in dem ein Fühlstift zur exakten Bestimmung der Stellung der Spannbacken vorgesehen ist. Bei diesem Spannfutter ist es nicht möglich zuerst die Stellung der Spannbacken auf schnellem Wege voreinzustellen, um so eine schnelle und bedienerfreundliche Betätigung eines Spannfutters mit einem hohen Spannbereich zu realisieren. Somit ist keine Unterscheidung zwischen einem Verstellhub und einem Spannhub erkennbar ist.

Die DE 25 55 521 A1 zeigt ein Spannfutter mit einem Spiralring, wobei wiederum keine Unterscheidung zwischen dem Verstellhubmittel des Spiralrings und einem Spannhub getroffen ist, so dass keine schnelle Voreinstellung möglich ist.

Die DE 27 08 755 A1 zeigt ein Spannfutter mit einem Spiralring, wobei bei diesem Spiralring zwei Verstellmöglichkeiten vorgesehen sind, nämlich indem der Spiralring als Doppeltellerrad gestaltet ist, dessen innere Zähne mit den Ritzeln kämmen, während die äußere Verzahnung zum Zusammenwirken mit einer Spannautomatik vorgesehen ist. Bei diesem Spannfutter ist damit auch eine doppelte Verstellmöglichkeit gegeben, allerdings ist eine in radialer Richtung erfolgende Verstellung des Spiralringes nicht vorgesehen und auch nicht möglich.

Der Erfindung liegt daher die Aufgabe zugrunde, ein bedienerfreundliches Spannfutter mit einer schnellen Verschlußmöglichkeit und hohen Spannkräften zu realisieren.

Diese Aufgabe wird nach der Erfindung bei einem Spannfutter der eingangs genannten Art dadurch gelöst, dass das Spannmittel parallel zu der Drehachse im Futterkörper angeordnet ist und parallel zu der Drehachse bewegbar ist. Dadurch wird es möglich, über das Verstellhubmittel eine schnelle und einfach zu realisierende Voreinstellung des Spannmittels zu gewährleisten, so dass Werkstücke mit stark unterschiedlichem Durchmesser alle durch dasselbe Spannfutter gespannt werden können. Das Spannhubmittel, welches parallel zur Drehachse im Futterkörper angeordnet ist und parallel zur Drehachse bewegbar ist, ermöglicht, nach Einsetzen des Werkstücks, durch Betätigung des Zugmittels das Werkstück mit höchster Spannkraft zu spannen. Im Rahmen der Erfindung ist es vorgesehen, dass der Futterkörper ein mit dem Spiralring verbindbares Verstellelement aufweist. Das Verstellelement überträgt die Bewegung des Spiralrings auf das ebenfalls mit dem Verstellelement verbindbare Spannmittel. Das Spannhubmittel ist parallel zur Drehachse, d.h. senkrecht zur Verstellrichtung des Verstellelements im Futterkörper angeordnet und parallel zur Drehachse d.h. senkrecht zur Verstellrichtung des Verstellelements bewegbar. Die Verstellrichtung des Verstellelements ist radial nach Außen oder radial nach Innen. Diese Anordnung und Verstellrichtung des Spannhubmittels führt zu einer erheblichen Platzersparnis im Futterkörper und ermöglicht so andere Strukturen, z.B. Hohlräume auszubilden, die zu einer Gewichtsreduktion führen.

Der Trieb kann dabei automatisch oder manuell betätigbar sein, wobei in einer besonders bevorzugten Ausführungsform der Trieb automatisch betätigbar ist und dem Trieb ein Sensor zugeordnet ist, der die automatische Vorverstellung überwacht. Dies kann beispielsweise durch die Bestimmung der Anzahl der Umdrehungen des Triebs geschehen. Spannfutter, die einen großen Spannbereich aufweisen, haben häufig den Nachteil, dass zur Veränderung des Spanndurchmessers die Spannmittel manuell gelöst werden und verschoben werden müssen, was die Fertigung zeitaufwendig und teuer macht. Eine automatische Voreinstellung beschleunigt dieses Verfahren erheblich und ermöglicht es darüber hinaus in mannlosen Schichten zu fertigen.

Insbesondere ist es bevorzugt, wenn mindestens drei regelmäßig über den Umfang am Futterkörper verteilte Spannmittel vorgesehen sind und dass jedem der Spannmittel ein Spannhubmittel zugeordnet ist. Weiterhin ist es vorgesehen, dass das Zugmittel hydraulisch oder pneumatisch oder elektrisch betätigbar ist. Im Falle einer hydraulischen oder pneumatischen Betätigung ist es günstig, wenn das Zugmittel als Kolben ausgebildet ist und dass im Futterkörper eine Zugstange oder ein Zugrohr ausgebildet ist.

Im Rahmen der Erfindung ist es weiterhin vorgesehen, dass das Spannhubmittel einen Zapfen und ein Sicherungsmittel umfasst, und dass das Sicherungsmittel in einer am Zugmittel ausgebildeten Führungstasche angeordnet ist. Das Sicherungsmittel dient dabei zum einen als Sicherung des Spannhubmittels vor dem Herausfallen, wenn das Spannmittel nicht an dem Futterkörper angebracht ist und überträgt über den Zapfen, bei Betätigung des Hubmittels, die Bewegung desselben auf das Spannmittel. Durch die Führungstasche, die eine radiale Ausdehnung aufweist, ist das Spannhubmittel bewegbar in dieser angeordnet. In einer bevorzugten Ausführungsform ist das Sicherungsmittel als Endscheibe am Zapfen gebildet.

Im Rahmen der Erfindung weiterhin bevorzugt ist es, wenn der Futterkörper an der den Spannmitteln zugewandten Seite eine Abschlussplatte aufweist und dass in der Abschlussplatte ein Hohlraum gebildet ist. In diesem Hohlraum ist es vorgesehen, dass das Spannmittel und das Verstellelement bewegbar angeordnet sind, insbesondere ist es vorgesehen, dass ein Teil des Verstellelements bewegbar im Hohlraum angeordnet ist. Durch die Ausbildung von Hohlräumen kommt es zu einer Gewichtsreduktion des Spannfutters. Durch die Anordnung des Verstellelements in dem Hohlraum wird das Verstellelement bei Betätigung des Triebes über den Spiralring innerhalb des Hohlraums, radial nach innen oder nach außen geschoben, so dass eine Voreinstellung des gewünschten Spannbereichs vorgenommen werden kann.

Insbesondere ist es vorteilhaft, wenn im Futterkörper eine Verstellelementtasche ausgebildet ist, in der zumindest ein Teil des Verstellelements bewegbar angeordnet ist. Dies führt zu einer weiteren Gewichtsreduktion. Dabei ist es vorgesehen, dass bei Betätigung des Triebs das Verstellelement und mit dem Verstellelement das Spannhubmittel und das Spannmittel radial nach außen oder nach innen bewegbar ist, wobei zumindest das Spannhubmittel und das Verstellelement in der Verstellelementtasche dem Hohlraum und der Führungstasche bewegbar sind. In diesem Zusammenhang ist es insbesondere vorgesehen, dass die radiale Ausdehnung der Verstellelementtasche mindestens der radialen Ausdehnung der Führungstasche entspricht. Dadurch wird ein paralleles Verschieben des Spannhubmittels und des Verstellelements ermöglicht. Je nach Durchmesser der Endscheibe des Spannhubmittels ist es auch möglich, dass die Ausdehnung der Verstellelementtasche größer oder kleiner der radialen Ausdehnung der Führungstasche ist.

Im Rahmen der Erfindung weiterhin bevorzugt ist es, wenn der Abschlussplatte eine Sicherungsplatte zugeordnet ist und wenn im Spannmittel oder im Verstellelement eine Sicherungsaufnahme ausgebildet ist, in die die Sicherungsplatte eingreift. Dies dient der Sicherung des Verstellelements oder des Spannmittels vor einem ungewollten Lösen, sowie dient der Führung derselben bei Verstellung durch den Trieb oder das Zugmittel.

Im Rahmen der Erfindung ist es insbesondere vorgesehen, dass das Spannmittel als Spannbacke oder als Planspannfinger gebildet ist. Dabei ist es insbesondere bevorzugt, wenn die Ausbildung des dem Spannmittel zugeordneten Spannhubmittels und des Verstellelements an die Ausbildung des Spannmittels angepasst ist. Weiterhin ist es vorteilhaft, wenn das Verstellelement als Verstellbacke gebildet ist.

In diesem Zusammenhang ist es im Rahmen einer Ausführungsform vorgesehen, dass das der Spannbacke zugeordnete Spannhubmittel als Spannklaue gebildet ist, die einen Keil aufweist, der in einer in der Spannbacke ausgebildeten Keilaufnahme angeordnet ist. Dabei führt die Betätigung der Spannklaue zu einer Verstellung des Keils innerhalb der Keilaufnahme, wodurch die Spannbacken radial nach innen oder außen verstellt werden, um das Werkstück zu spannen.

Dabei ist es insbesondere vorteilhaft, wenn jeder Spannbacke eine im Verstellelement ausgebildete Verstellelementaufnahme zugeordnet ist, in der zumindest ein Teil der Spannklaue aufgenommen wird. Diese Anordnung ermöglicht eine besonders platzsparenden Möglichkeit das Verstellhubmittel, in diesem Fall den Spiralring, das Verstellelement und das Spannhubmittel, in diesem Fall eine Spannklaue, in einem Futterkörper zu integrieren und dabei einen großen Spannbereich und eine hohe Spannkraft zu realisieren.

In einer alternativen Ausführungsform ist es vorgesehen, dass das dem Planspannfinger zugeordnete Spannhubmittel als Stift gebildet ist und dass der Stift mit dem Planspannfinger verbindbar ist. Alternativ kann der Stift aber auch als Schraube oder als Niet gebildet sein. Über den Stift wird bei Betätigung des Zugmittels die Kraft auf den Planspannfinger übertragen und dieser so axial verschoben, so dass das Werkstück gespannt wird.

In diesem Zusammenhang ist es vorteilhaft, dass jedem Planspannfinger eine im Verstellelement ausgebildete Verstellelementaufnahme zugeordnet ist, in der der Planspannfinger und der Stift zumindest teilweise aufgenommen wird. Dies führt ebenso zu einer Platz sparenden Möglichkeit, das Verstellhubmittel (den Spiralring), Verstellelement und das Spannhubmittel (den Stift) in einem Futterkörper zu integrieren bei gleichzeitig großem Spannbereich und hoher Spannkraft.

Ganz besonders vorteilhaft ist es, wenn an der den Spannmitteln abgewandten Seite des Verstellelements, radial nach außen liegend ein Verstellelementgewinde ausgebildet ist. Das Verstellelementgewinde ermöglicht dabei die Spannmittel radial nach außen oder innen zu verstellen. In diesem Zusammenhang hat es sich weiterhin als günstig erwiesen, dass der Trieb radial am Futterkörper angeordnet ist und eine Verzahnung aufweist, die in die Verzahnung des Spiralrings zur Kraftübertragung auf den Spiralring eingreift. Dies ermöglicht eine platzsparende und effektive Möglichkeit den Spiralring bzw. das Verstellelement zu betätigen, wobei gleichzeitig erreicht wird, den Trieb automatisch oder manuell zu betätigen. Besonders bevorzugt ist es, wenn die Verzahnung als Kegelverzahnung gebildet ist.

Zusammenfassend ist der Vorteil des erfindungsgemäßen Spannfutters darin zu sehen, dass durch die Anordnung des Spannhubmittels in einer Verstellelementaufnahme des Verstellelements, eine platzsparende und effektive Möglichkeit der Vorverstellung des Spannmittels und des Spannens des Spannmittels geschaffen wird, bei einem Spannfutter mit einem großen Spannbereich. Durch diese Anordnung besteht innerhalb des Spannfutters Platz für andere Strukturen, wie dem Hohlraum, die Führungstasche und die Verstellelementtasche, die einen weiten Verstellhub, d.h. einen hohen Spannbereich ermöglicht und gleichzeitig zur Gewichtsreduktion des Futterkörpers beiträgt. Der radial am Futterkörper ausgebildete Trieb ermöglicht sowohl eine manuelle als auch eine automatische Betätigung des Spiralrings. Im Falle einer automatischen Betätigung des Spiralrings, sprich einer automatischen Voreinstellung der Spannmittel, ist es möglich die Fertigungskosten zu senken und in mannlosen Schichten zu fertigen bzw. zu spannen. Darüber hinaus ist das erfindungsgemäße Spannfutter nicht auf eine Betätigungsart des Zugmittels eingeschränkt, sondern kann hydraulisch, pneumatisch oder elektrisch betrieben werden.

Im Folgenden wird die Erfindung an zwei in den Zeichnungen dargestellten Ausführungsbeispielen näher erläutert; es zeigen:
- Fig. 1: eine Draufsicht auf die erste Ausführungsform des erfindungsgemäßen Spannfutters,
- Fig. 2: den Schnitt II-II der ersten Ausführungsform des erfindungsgemäßen Spannfutters,
- Fig. 3: den Schnitt III-III aus Fig. 1,
- Fig. 4: eine Draufsicht auf die zweite Ausführungsform des erfindungsgemäßen Spannfutters, und
- Fig. 5: den Schnitt V-V aus Fig. 4.

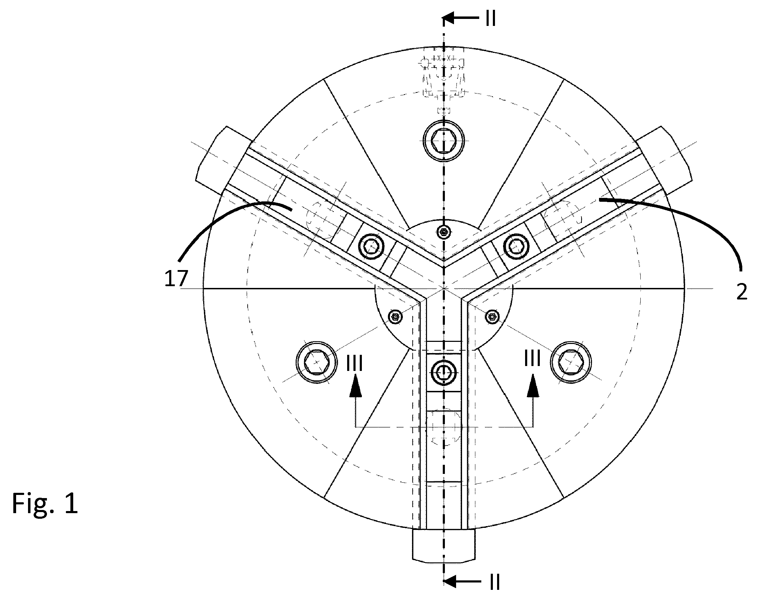

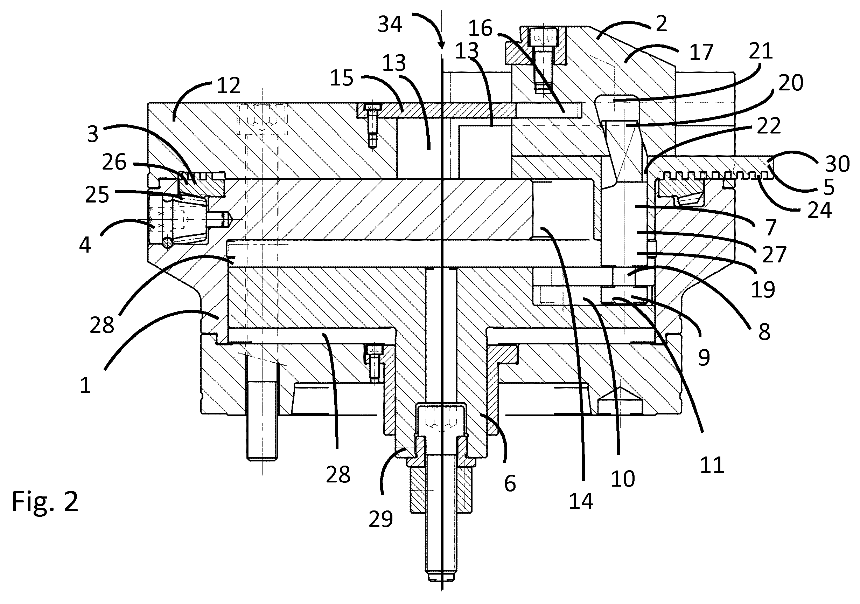

Fig. 1 zeigt eine erste Ausführungsform des erfindungsgemäßen Spannfutters, welches über drei regelmäßig über den Umfang verteilte Spannmittel 2 in Form von Spannbacken 17 verfügt. Fig. 2 zeigt einen Längsschnitt der ersten Ausführungsform des erfindungsgemäßen Spannfutters, anhand dessen der funktionelle Aufbau des Spannfutters im Folgenden erläutert werden soll. Das Spannfutter weist dabei einen Futterkörper 1 auf, in dem ein über ein radial am Futterkörper 1 ausgebildeten Trieb 4 betätigbarer Spiralring 26 ausgebildet ist. Dieser Spiralring 26 dient als Verstellhubmittel 3 der Vorverstellung des Verstellelements 5 und der Spannbacken 17. Der Trieb 4 kann dabei automatisch oder manuell betätigt werden und weist eine Verzahnung 25 auf, die in die Verzahnung 25 des Spiralringes 26 zur Kraftübertragung auf den Spiralring 26 eingreift. An der Unterseite der Verstellelements 5 ist radial nach außen liegend ein Verstellelementgewinde 24 ausgebildet, das wiederum mit dem Spiralring 26 zusammenwirkt. Das Verstellelement 5 ist als Verstellbacke gebildet und weist darüber hinaus eine Verstellelementaufnahme 22 auf, die sich zylinderförmig um das Spannhubmittel 7 schließt. Das Spannhubmittel 7 ist als Spannklaue 19 gebildet, die ein Sicherungsmittel 9, einen Zapfen 8, einen Spannhubmittelkörper 27 und einen Keil 20 aufweist, der in einer in der Spannbacke 17 ausgebildeten Keilaufnahme 21 angeordnet ist. Die Spannklaue 19 ist parallel zur Drehachse 34 d.h. senkrecht zu der Verstellrichtung des Verstellelements 5 im Futterkörper 1 angeordnet und ist parallel zur Drehachse 34 d.h. senkrecht zu der Verstellrichtung des Verstellelements 5 in der Verstellelementaufnahme 22 und in der Keilaufnahme 21 bewegbar. Weiterhin weist der Futterkörper 1 an der den Spannbacken 17 zugewandten Seite eine Abschlussplatte 12 auf, wobei in der Abschlussplatte 12 ein Hohlraum 13 gebildet ist. Im Futterkörper 1 ist darüber hinaus eine Verstellelementtasche 14 ausgebildet sowie eine Zugmittelaufnahme 28, in der das Zugmittel 6 angeordnet ist. Das Zugmittel 6 ist dabei als Kolben 29 mit einem Zugrohr gebildet. Im Kolben ist wiederum eine Führungstasche 10 ausgebildet, die eine radiale Ausdehnung aufweist, in der das als Endscheibe 11 gebildete Sicherungsmittel 9 angeordnet ist. Im Hohlraum 13 sind der Verstellelementteller 30 und Teile der Spannbacken 17 bewegbar angeordnet. Die Abschlussplatte 12 weist darüber hinaus eine Sicherungsplatte 15 auf, die in eine an den Spannbacken 17 ausgebildete Sicherungsaufnahme 16 eingreift. Die Verstellelementaufnahme 22 mit dem Spannhubmittelkörper 27 ist in der Verstellelementtasche 14 bewegbar angeordnet.

Zur Voreinstellung des Spanndurchmessers wird der Trieb 4 betätigt, wodurch das Verstellelement 5 über den Spiralring 26 radial nach außen oder innen innerhalb des Hohlraums 13 bewegt wird. Mit dem Verstellelement 5 bewegt sich die Spannklaue 19 mit, so dass die Bewegung des Verstellelements 5 über den Keil 20 der Spannklaue 19 auf die Spannbacken 17 übertragen wird. Das Verstellelement 5 und die Spannklaue 19 können dabei innerhalb der Verstellelementtasche 14, der Zugmittelaufnahme 28 und der Führungstasche 10 bewegt werden. Die Bewegung der Spannbacken 17 wird dabei zusätzlich geführt, in dem sich die Sicherungsplatte 15 innerhalb der Sicherungsaufnahme 16 der Spannbacken 17 bewegt. Nach der Voreinstellung der Spannbacken 17 wird das Werkstück eingesetzt, dies kann ebenfalls manuell oder automatisch erfolgen, und das Werkstück gespannt, indem der Kolben 29 mit dem Zugrohr, je nachdem ob Außenspannung oder Innenspannung vorgesehen ist, in Richtung Spannbacken 17 oder in die von den Spannbacken 17 abgewandte Richtung gezogen bzw. geschoben wird. Die Bewegung des Kolbens 29 wird dabei über das Sicherungsmittel 9 der Spannklaue 19 auf den Keil 20 übertragen, der sich innerhalb der Keilaufnahme 21 der Spannbacke 17 bewegt. Die asymmetrische Form der Keilaufnahme 21 führt zu einer radialen Verstellung der Spannbacken 17 nach außen oder innen. Der Kolben 29 kann dabei pneumatisch, hydraulisch oder elektrisch betätigt werden.

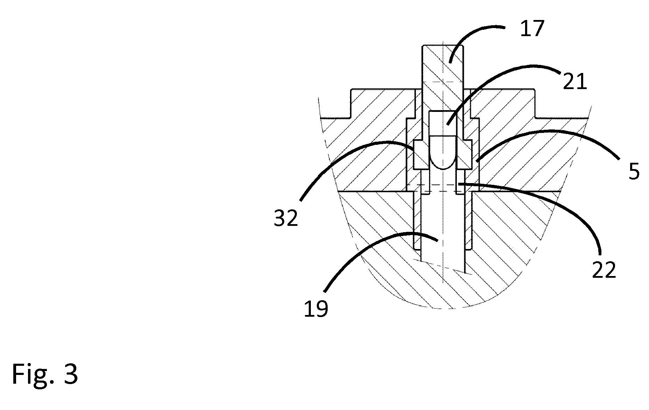

Fig. 3 zeigt einen Querschnitt, in der die Anordnung der Spannklaue 19 innerhalb des Futterkörpers 1 und ihr Zusammenwirken mit der Spannbacke 17 und dem Verstellelement 5 erläutert werden. Dabei wird verdeutlicht, dass die Spannklaue 19 innerhalb der Verstellelementaufnahme 22 bewegbar ist und dass die Verstellelementaufnahme 22 dabei nicht nur die Spannklaue 19, sondern auch einen Teil der Spannbacke 17 aufnimmt. Gleichzeitig weist das Verstellelement 5 Aufnahmen 32 auf, in die die Spannbacke 17 eingreift und somit zum einen als Führungsnut zur Aufnahme der Spannbacke 17 und zum anderen der zusätzlichen Sicherung der Spannbacken 17 dienen.

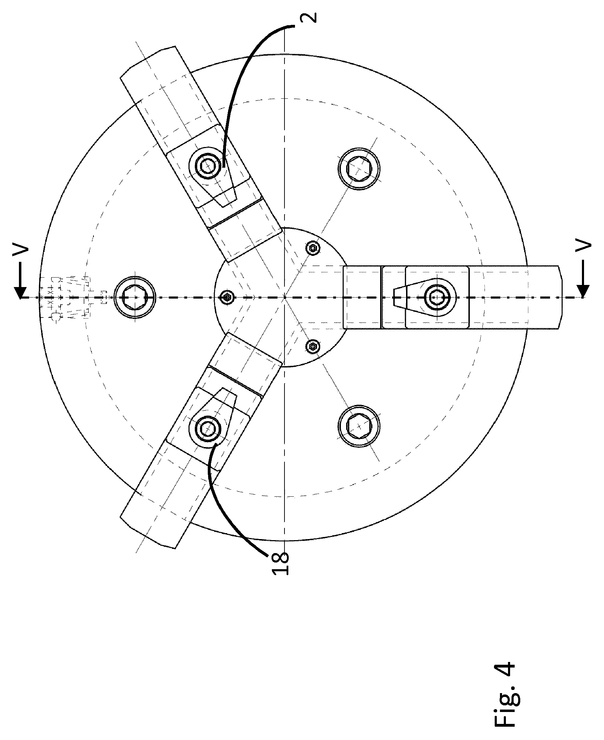

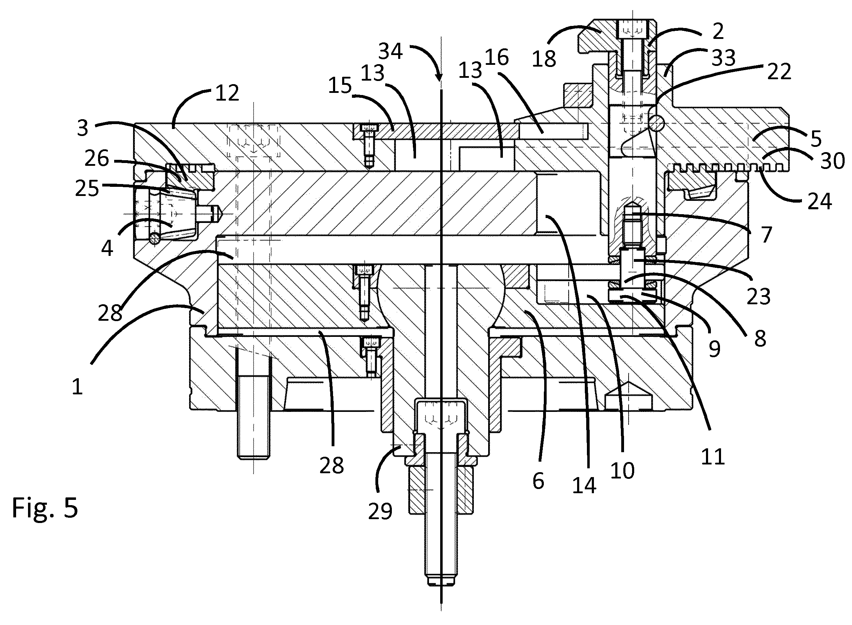

Fig. 4 zeigt eine Draufsicht der zweiten Ausführungsform des erfindungsgemäßen Spannfutters, welches drei gleichmäßig über den Umfang verteilte Planspannfinger 18 als Spannmittel 2 aufweist. Fig. 5 zeigt einen Längsschnitt der zweiten Ausführungsform des erfindungsgemäßen Spannfutters, dessen Aufbau ähnlich zu dem der ersten Ausführungsform ist, wobei das Spannhubmittel 7 als Stift 23 gebildet ist, der mit dem Planspannfinger 18 verbunden ist. Die Sicherungsaufnahme 16 ist nicht am Spannmittel 2, sondern am Verstellelement 5 ausgebildet und im Hohlraum 13 ist der Verstellelementteller 30 bewegbar angeordnet. Das Verstellelement 5 weist auf der dem Spannmittel 2 zugeordneten Seite einen Verstellelementaufsatz 33 auf, sowie eine Verstellelementaufnahme 22, in der der Planspannfinger 18 und der mit ihm verbundene Stift 23 bewegbar angeordnet sind.

Die Voreinstellung erfolgt wiederum über die Betätigung des am Futterkörper 1 radial angeordneten Triebes 4, der eine radiale Vorverstellung des Verstellelements 5 über den Spiralring 26 nach außen oder innen bewirkt. Aufgrund der Anordnung der Planspannfinger 18 innerhalb der Verstellelementaufnahme 22 werden die Planspannfinger 18 radial nach außen oder innen verstellt, wobei gemeinsam mit dem Verstellelement 5 der Stift 23 radial nach außen oder innen innerhalb der Führungstasche 10, der Zugmittelaufnahme 28 und mit dem Verstellelement 5 in der Verstellelementtasche 14 bewegt wird. Nach erfolgter Voreinstellung, die manuell oder automatisch erfolgen kann, wird das Werkstück eingesetzt und dieses gespannt, indem der Kolben 29 über die Zugstange in Richtung Planspannfinger 18 oder entgegen der Richtung des Planspannfingers 18 bewegt wird. Im Gegensatz zur ersten Ausführungsform erfolgt die Spannbewegung des Planspannfingers 18 senkrecht zur Verstellbewegung des Verstellelements 5.

### Bezugszeichenliste

- 1: Futterkörper
- 2: Spannmittel
- 3: Verstellhubmittel
- 4: Trieb
- 5: Verstellelement
- 6: Zugmittel
- 7: Spannhubmittel
- 8: Zapfen
- 9: Sicherungsmittel
- 10: Führungstasche
- 11: Endscheibe
- 12: Abschlussplatte
- 13: Hohlraum
- 14: Verstellelementtasche
- 15: Sicherungsplatte
- 16: Sicherungsaufnahme
- 17: Spannbacke
- 18: Planspannfinger
- 19: Spannklaue
- 20: Keil
- 21: Keilaufnahme
- 22: Verstellelementaufnahme
- 23: Stift
- 24: Verstellelementgewinde
- 25: Verzahnung
- 26: Spiralring
- 27: Spannhubmittelkörper
- 28: Zugmittelaufnahme
- 29: Kolben
- 30: Verstellelementteller
- 31: Führungsflächen
- 32: Aufnahme
- 33: Verstellelementaufsatz
- 34: Drehachse

## Patentansprüche

1. Spannfutter mit einem Futterkörper (1), einer Drehachse (34), mindestens zwei Spannmitteln (2), einem als Verstellhubmittel (3) der Verstellung der mindestens zwei Spannmittel (2) dienenden, über einen Trieb (4) betätigbaren Spiralring 26 und mit mindestens einem über ein Zugmittel (6) betätigbaren Spannhubmittel (7), **dadurch gekennzeichnet, dass** das Spannhubmittel (7) parallel zu der Drehachse (34) im Futterkörper (1) angeordnet ist und parallel zu der Drehachse (34) bewegbar ist.

2. Spannfutter nach Anspruch 1, **dadurch gekennzeichnet, dass** der Futterkörper (1) ein Verstellelement (5) aufweist, das mit dem Spiralring (26) verbindbar ist.

3. Spannfutter nach Anspruch 1 oder 2, **dadurch gekennzeichnet, dass** das Spannhubmittel (7) einen Zapfen (8) und ein Sicherungsmittel (9) umfasst, und dass das Sicherungsmittel (9) in einer am Zugmittel (6) ausgebildeten Führungstasche (10) angeordnet ist.

4. Spannfutter nach Anspruch 3, **dadurch gekennzeichnet, dass** das Sicherungsmittel (9) als Endscheibe (12) am Zapfen (8) gebildet ist.

5. Spannfutter nach einem der Ansprüche 1 bis 4, **dadurch gekennzeichnet, dass** der Futterkörper (1) an der den Spannmitteln (2) zugewandten Seite eine Abschlussplatte (12) aufweist und dass in der Abschlussplatte (12) ein Hohlraum (13) gebildet ist.

6. Spanfutter nach einem der Ansprüche 2 bis 5, **dadurch gekennzeichnet, dass** im Futterkörper (1) eine Verstellelementetasche (14) ausgebildet ist, in der zumindest ein Teil des Verstellelements (5) bewegbar angeordnet ist.

7. Spannfutter nach Anspruch 6, **dadurch gekennzeichnet, dass** die radiale Ausdehnung der Verstellelementtasche (14) mindestens der radialen Ausdehnung der Führungstasche (10) entspricht.

8. Spannfutter nach einem der Ansprüche 5 bis 7, **dadurch gekennzeichnet, dass** der Abschlussplatte (12) eine Sicherungsplatte (15) zugeordnet ist und dass im Spannmittel (2) oder im Verstellelement (5) eine Sicherungsaufnahme (16) ausgebildet ist, in die die Sicherungsplatte (15) eingreift.

9. Spannfutter nach einem der Ansprüche 1 bis 8, **dadurch gekennzeichnet, dass** das Spannmittel (2) als Spannbacke (17) oder als Planspannfinger (18) gebildet ist.

10. Spannfutter nach Anspruch 9, **dadurch gekennzeichnet, dass** das der Spannbacke (17) zugeordnete Spannhubmittel (7) als Spannklaue (19) gebildet ist, die einen Keil (20) aufweist, der in einer in der Spannbacke (17) ausgebildeten Keilaufnahme (21) angeordnet ist.

11. Spannfutter nach Anspruch 10, **dadurch gekennzeichnet, dass** jeder Spannbacke (17) eine im Verstellelement (5) ausgebildete Verstellelementaufnahme (22) zugeordnet ist, in der zumindest ein Teil der Spannklaue (19) aufgenommen wird.

12. Spannfutter nach Anspruch 9, **dadurch gekennzeichnet, dass** das dem Planspannfinger (18) zugeordnete Spannhubmittel (7) als Stift (23) gebildet ist und dass der Stift (23) mit dem Planspannfinger (18) verbindbar ist.

13. Spannfutter nach Anspruch 12, **dadurch gekennzeichnet, dass** jedem Planspannfinger (18) eine im Verstellelement (5) ausgebildete Verstellelementaufnahme (22) zugeordnet ist, in der der Planspannfinger (18) und der Stift (23) zumindest teilweise aufgenommen wird.

14. Spannfutter nach einem der Ansprüche 2 bis 13, **dadurch gekennzeichnet, dass** an der dem Spannmitteln (2) abgewandten Seite des Verstellelements (5), radial nach außen liegend ein Verstellelementgewinde (24) ausgebildet ist.

15. Spannfutter nach einem der Ansprüche 1 bis 14, **dadurch gekennzeichnet, dass** der Trieb (4) radial am Futterkörper (1) angeordnet ist und eine Verzahnung (25) aufweist, die in die Verzahnung (25) des Spiralrings (26) zur Kraftübertragung auf den Spiralring (26) eingreift.
